# EUROPÄISCHE PATENTSCHRIFT

(11) **EP 2 127 723 B1**
(45) Veröffentlichungstag und Bekanntmachung des Hinweises auf die Patenterteilung: **20.10.2010**
(21) Anmeldenummer: 09160743.2
(22) Anmeldetag: 20.05.2009
(51) Int. Cl.: B01D 46/10, B01D 46/00, B01D 46/52

(54) **Filterelement und Verfahren zur Herstellung des Filterelements**
Filter element and method for manufacturing same
Elément de filtre et procédé de fabrication de l'élément de filtre

(30) Priorität: 20.05.2008 DE 102008024412
(43) Veröffentlichungstag der Anmeldung: 02.12.2009
(73) Patentinhaber: MANN+HUMMEL GmbH, 71638 Ludwigsburg (DE)
(72) Erfinder: Tschiersch, Hubert, 07639 Weissenbom (DE)

(56) Entgegenhaltungen:
- DE-A1- 1 782 600
- DE-A1- 10 131 422
- DE-A1- 10 231 696
- DE-A1- 10 249 577
- JP-A- 11 221 412

## Beschreibung

Die Erfindung betrifft ein Filterelement mit mindestens einer Sorptions-Filterlage (14), die eine Trägerlage (18) mit Sorptionsmittel-Partikeln (20) aufweist, und mit mindestens einer Partikelfilterlage (16) und/oder Abdecklage, wobei die Lagen (14, 16) gemeinsam einen zick-zack-förmig gefalteten Filterpack (12) mit voneinander entfernten Endfalten (22) bilden, deren Endränder (24) abgedichtet sind, so dass die Sorptionsmittel-Partikel (20) im Filterpack (12) unverlierbar vorgesehen sind, wobei an den Längsseiten des Filterpacks (12) jeweils ein streifenförmiges Rahmenelement (26) und an den stirnseitigen Endfalten (22) des Filterpacks (12) jeweils ein streifenförmiges Stirnelement (28) befestigt ist. Ferner betrifft die Erfindung ein Verfahren zur Herstellung eines solchen Filterelementes.

Ein Filterelement der eingangs genannten Art ist beispielsweise aus der DE 102 49 577 A1 bekannt. Um die Sorptionsmittel-Partikel im Filterelement zuverlässig festzulegen bzw. zurückzuhalten, ist die jeweilige Endfalte beispielsweise derartig bearbeitet, dass die mindestens eine Partikelfilterlage in Bezug zur Adsorptions-Filterlage verkürzt ist, dass das jeweilige streifenförmige Stirnelement mit der Trägerlage der Adsorptions-Filterlage der zugehörigen Endfalte dicht und fest verbunden ist, und dass eine Kleberraupe zwischen dem Stirnelement und/oder der Trägerlage der Adsorptions-Filterlage und der mindestens einen Partikelfilterlage, den freigelegten Abschnitt der Trägerlage mit den daran fixierten Sorptionsmittel-Partikel überbrückend, vorgesehen ist. Eine andere Möglichkeit, die Sorptionsmittel-Partikel im Filterelement zuverlässig festzulegen bzw. zurückzuhalten, besteht dort darin, dass an der jeweiligen Endfalte die mindestens eine Partikelfilterlage von der Adsorptions-Filterlage weggeklappt und die Sorptionsmittel-Partikel vom freigelegten Flächenabschnitt der Trägerlage entfernt werden, wonach der freigelegte Flächenabschnitt der Trägerlage mit der mindestens einen Partikelfilterlage mittels einer Kleberraupe dicht und fest verklebt wird. Des Weiteren ist es möglich, dass am stirnseitigen Endrand der jeweiligen Endfalte ein mit einem Kleber beschichteter Klebestreifen festgeklebt ist, der sich von der Trägerlage der Adsorptions-Filterlage bis zur mindestens einen Partikelfilterlage herum erstreckt und an dieser befestigt ist. Bei dieser Ausbildung der zuletzt genannten Art ist also zusätzlich zum jeweiligen Stirnelement ein Klebestreifen vorgesehen, d.h. es sind zwei Komponenten, nämlich das jeweilige Stirnelement und der zugehörige Klebestreifen bei der Herstellung des Filterelementes passend zu handhaben.

Aus der DE 197 30 817 A1 ist ein Filterelement mit einem zick-zack-förmig gefalteten Filterpack bekannt, wobei an den beiden gegenüberliegenden Längsseiten des Filterpacks jeweils ein streifenförmiges Rahmenelement vorgesehen ist. An den beiden voneinander entfernten stirnseitigen Endfalten des Filterpacks ist jeweils eine Abschlussleiste vorgesehen. An der jeweiligen Abschlussleiste sind seitliche Verbindungsabschnitte angeformt, welche die Rahmenelemente teilweise überdecken.

Die DE 197 57 423 C1 beschreibt ein Filterelement mit einem zick-zack-förmig gefalteten Filterpack, dessen stirnseitige Endfalten jeweils von einem formstabilisierenden Verstärkungselement dichtend umschlossen sind. Das jeweilige Verstärkungselement ist klammerförmig ausgebildet und einstückig mit einer Dichtung versehen, die unter elastischer Vorspannung dichtend an die jeweils angrenzende Gehäusewand eines Filtergehäuses anlegbar ist. Bei diesem bekannten Filterelement bestehen die Verstärkungselemente vorzugsweise aus Polypropylen.

Aus der EP 0 983 784 B1 ist ein Filterelement mit einem zick-zack-förmig gefalteten Filterpack und einem diesen umschließenden rechteckigen Filterrahmen bekannt, der abdichtend an die Längsseiten und die stirnseitigen Endfalten des Filterpacks anschließt, wobei mindestens eine stirnseitige Endfalte in einen Abschluss eingebracht ist, der einen Teil des Filterrahmens bildet. Bei diesem bekannten Filterelement besteht der Abschluss aus zwei Teilen, in welche die zugehörige stirnseitige Endfalte eingeklemmt ist, wobei die beiden Teile des Abschlusses miteinander verbunden sind. Der Abschluss besteht vorzugsweise aus mindestens einem zumindest im wesentlichen strangförmigen Profil. Bei diesem strangförmigen Profil handelt es sich vorzugsweise um ein Extrusionsteil aus Kunststoff. Der Abschluss kann durch eine Clipverbindung verschlossen sein. Desgleichen ist es möglich, dass der Abschluss durch eine Klebeverbindung mit dem Filterpack verbunden ist.

Ein Filterelement der eingangs genannten Art ist beispielsweise auch aus der DE 198 44 874 A1 bekannt. Bei diesem bekannten Filterelement weist die jeweilige stirnseitige Endfalte des zick-zack-förmig gefalteten Filterpacks eine Versiegelung auf, die durch eine Verklebung oder durch eine Verschweißung der Außenseite mit der Innenseite des Filterpacks gebildet ist. Bei diesem bekannten Filterelement besitzt das jeweilige streifenförmige Stirnelement dieselbe Höhenabmessung wie die zugehörige stirnseitige Endfalte und die Verklebung oder Verschweißung erstreckt sich nur über einen Teil der besagten Höhenabmessung der Endfalte. Die Abdichtung des Filterpacks erfolgt dort also nur durch die Verklebung oder Verschweißung, so dass sie noch Wünsche offen lassen kann.

Aus der DE 10 2004 015 377 A1 ist ein Filterelement mit einem zick-zack-förmig gefalteten Filterpack bekannt, wobei Sorptionsmittel-Partikel zwischen zwei Folien aus Kunststoff eingefüllt sind. Um die Sorptionsmittel-Partikel zwischen den beiden Kunststofffolien unverlierbar festzuhalten, sind die beiden Kunststofffolien entlang ihrer Endränder aneinander angeschlossen. Zu diesem Zwecke kann der jeweilige Endrand aus einer durch Ultraschall geschnittenen und verschweißten Kante bestehen.

Ein kombinierter Partikel- und Adsorptionsfilter mit einer Partikelfilterlage und mit zwei Adsorptionslagen ist beispielsweise aus der DE 102 49 998 B3 bekannt, wobei die Partikelfilterlage zwischen den beiden Adsorptionslagen angeordnet und mit diesen verbunden ist. Jede Adsorptionslage weist an einer Trägerlage eine Adsorptionsschicht auf. Die beiden Adsorptionslagen sind mit der Partikelfilterlage derartig verbunden, dass die Adsorptionsschichten der Partikelfilterlage zugewandt und die Trägerlagen den beiden Adsorptionslagen von der Partikelfilterlage und voneinander abgewandt sind.

Der Erfindung liegt die Aufgabe zugrunde, ein Filterelement der eingangs genannten Art zu schaffen, das einfach und preisgünstig herstellbar ist, wobei die Sorptionsmittel-Partikel im Filterelement auf einfache Weise zuverlässig unverlierbar zurückgehalten werden.

Diese Aufgabe wird mit dem Gegenstand des Patentanspruchs 1 gelöst. Es handelt sich hierbei um ein Filterelement mit mindestens einer Sorptions-Filteranlage, die eine Trägerlage mit Sorptionsmittel-Partikeln aufweist und mit mindestens einer Partikelfilterlage und/oder Abdecklage, wobei die Lagen gemeinsam einen zick-zack-förmig gefalteten Filterpack mit voneinander entfernten Endfalten bilden. Die Sorptionsmittel-Partikel können adsorptiv oder absorptiv ausgebildet sein, so daß es sich bei der Sorptions-Filteranlage also um eine Adsorptions-Filteranlage oder eine Absorptions-Filteranlage handeln kann. Ferner sind auch Ausführungen mit einer Mischung aus Adsorptionsmittel-Partikeln und Absorptionsmittel-Partikeln möglich. Das Filterelement kann als Kombifilter mit einer Sorptions-Filteranlage und einer Partikel-Filteranlage ausgebildet sein. Es sind jedoch auch Ausführungen möglich, bei denen die Sorptionsmittel-Partikel lediglich zwischen zwei Abdecklagen, die über keine nennenswerten Partikelfilter filternde Eigenschaften verfügen, z. B. Vlies-Lagen angeordnet ist. Solche Ausführungen können in der Praxis vorrangig als Geruchsfilter eingesetzt werden.

Bei dem erfindungsgemäßen Filterelement sind die Endränder abgedichtet, so dass die Sorptionsmittel-Partikel im Filterpack unverlierbar vorgesehen sind, wobei an den Längsseiten des Filterpacks jeweils ein streifenförmiges Rahmenelement und an den stirnseitigen Endfalten des Filterpacks jeweils ein streifenförmiges Stirnelement befestigt ist. Die Stirnlemente und die seitlichen Rahmenelemente können vorzugsweise miteinander verbunden sein. Sie können verbunden oder unverbunden eine Rahmeneinrichtung bilden, die den Filterpack umgibt. Vorzugsweise ist der Filterpack bzw. das Filterelement im Grundriß viereckig, insbesondere rechteckig. Es sind jedoch auch davon abweichende Grundrißformen möglich, die mehr oder weniger als vier Seitenteile aufweisen.

Bei sämtlichen erfindungsgemäßen Ausführungen ist vorgesehen, dass die jeweilige Endfalte mit dem zugehörigen Stirnelement materialschlüssig verbunden ist, wobei das Stirnelement mit einem Überstands-Randstreifen um den Endrand der zugehörigen Endfalte herum gebogen und mit der Innenseite der Endfalte materialschlüssig verbunden ist.

Bei dem erfindungsgemäßen Filterelement ist der jeweilige Endrand also mittels des zugehörigen Stirnelementes direkt und unmittelbar verschlossen, indem der Überstands-Randstreifen des Stirnelementes um den Endrand der Endfalte herum gebogen und mit der Innenseite der Endfalte materialschlüssig verbunden ist.

Dabei kann die jeweilige Endfalte mit dem zugehörigen Stirnelement mindestens teilflächig materialschlüssig verbunden sein. Eine andere Möglichkeit besteht darin, dass die jeweilige Endfalte mit dem zugehörigen Stirnelement ganzflächig materialschlüssig verbunden ist.

Bei der materialschlüssigen Verbindung der jeweiligen Endfalte mit dem zugehörigen Stirnelement und des um den Endrand der Endfalte herum gebogenen Überstands-Randstreifens des jeweiligen Stirnelementes kann es sich um eine Klebe- oder um eine Schweißverbindung handeln. Zweckmäßig ist es, wenn der Überstands-Randstreifen des jeweiligen Stirnelements mindestens eine Schwächungslinie aufweist, die dem Endrand der Endfalte zugeordnet ist. Bei dieser mindestens einen Schwächungslinie kann es sich um eine Ritzlinie, eine Prägelinie oder dergleichen handeln, um welche der Überstands-Randstreifen des Stirnelementes zur Innenseite der Endfalte hin umgebogen wird. Ist das jeweilige Stirnelement nur mit einer Schwächungslinie ausgebildet, so ergibt sich ein so genannter V-Umschlag. Zweckmäßig kann es jedoch sein, wenn der Überstands-Randstreifen des jeweiligen Stirnelementes zwei voneinander beabstandete und zueinander parallel verlaufende Schwächungslinien aufweist, wobei der Abstand zwischen den beiden Schwächungslinien an die Faltendicke oder/und die Wanddicke des Filterelements angepasst ist. Eine derartige Ausbildung des erfindungsgemäßen Filterelementes ist insbesondere dann vorteilhaft, wenn der Filterpack des Filterelementes eine relativ große Faltendicke besitzt. Bei einem solchen Filterelement kann es sich beispielsweise um ein Filterelement handeln, wie es in der eingangs zitierten DE 102 49 998 B3 beschrieben worden ist.

Die Länge des herumgebogenen Schenkels ist frei einstellbar und richtet sich vor allem nach dem Faltenabstand des Filterelements. Länger gewählte Schenkel bieten den Vorteil, dass auch nicht exakt geschnittene Endfalten zuverlässig versiegelt werden.

Um den Überstands-Randstreifen des jeweiligen Stirnelementes problemlos um den Endrand der zugehörigen Endfalte des Filterpacks zur Innenseite der Endfalte umzubiegen und dort festzukleben oder festzuschweißen, ist es vorteilhaft, wenn der Überstands-Randstreifen des jeweiligen Stirnelementes an seinen beiden voneinander abgewandten Ecken mit einer Aussparung, z. B. in Form einer Schräge versehen ist, so dass das Herumbiegen des Überstands-Randstreifens um den besagten Endrand der zugehörigen Endfalte problemlos möglich ist, weil durch diese Aussparung vermieden wird, dass der Überstands-Randstreifen mit den an den Längsseiten des Filterpacks vorgesehenen streifenförmigen Rahmenelementen in Berührung kommt. Die mit streifenförmigen Rahmenelementen versehenen längs- und stirnseitigen Rahmenelemente bilden eine Rahmeneinheit mit hoher Stabilität.

Alternativ besteht die Möglichkeit, die Länge der Stirnelemente mit den Überstands-Randstreifen an die Länge des plissierten Filterpacks anzugleichen. In diesem Fall kann die Aussparung des Überstand-Randstreifens des stirnseitigen Rahmenelementes an den Ecken entfallen, da beim herumbiegen des Überstands-Randstreifens um die Endfalte keine Überdeckung mit den längsseitigen Rahmenelementen auftreten kann.

Das erfindungsgemäße Verfahren gemäß dem Patentanspruch 9 zur Herstellung eines Filterelementes der oben genannten Art ist dadurch gekennzeichnet, dass an der jeweiligen stirnseitigen Endfalte des Filterpacks ein Stirnelement befestigt wird, das mit einem Überstands-Randstreifen über den Endrand der zugehörigen Endfalte übersteht, und dass der Überstands-Randstreifen anschließend um den Endrand der Endfalte herum gebogen und an der Innenseite der Endfalte befestigt wird. Bei dieser Befestigung kann es sich um ein Festkleben oder Festschweißen handeln.

Zweckmäßigerweise wird das jeweilige Stirnelement mit mindestens einer Schwächungslinie versehen, bevor es an der zugehörigen Endfalte befestigt wird. Dabei kann es bevorzugt sein, wenn die beiden voneinander abgewandten Ecken des Überstands-Randstreifens des an der Endfalte befestigten Stirnelementes abgeschrägt werden, wonach der Überstands-Randstreifen mit einem Kleber beschichtet und um den Endrand der Endfalte herum gefaltet und an der Innenseite der Endfalte festgeklebt wird.

Weitere Einzelheiten, Merkmale und Vorteile ergeben sich aus der nachfolgenden Beschreibung von in der Zeichnung dargestellten, aufeinander folgenden Verfahrensschritten zur Herstellung eines erfindungsgemäßen Filterelementes.

Es zeigen:
- Figur 1: in einer Schnittdarstellung abgeschnitten einen ersten Verfahrensschritt zur Herstellung des Filterelementes,
- Figur 2: einen Abschnitt des Filterelementes in Blickrichtung des Pfeiles II in Figur 1 insbesondere zur Verdeutlichung einer Abschrägung des Überstands- Randstreifens des jeweiligen Stirnelementes,
- Figur 3: einen an den Verfahrensschritt gemäß Figur 1 anschließenden zweiten Verfahrensschritt zur Herstellung des Filterelementes, und
- Figur 4: eine den Figuren 1 und 3 ähnliche abschnittweise Schnittdarstellung des Filterelementes nach Abschluss der Verfahrensschritte.

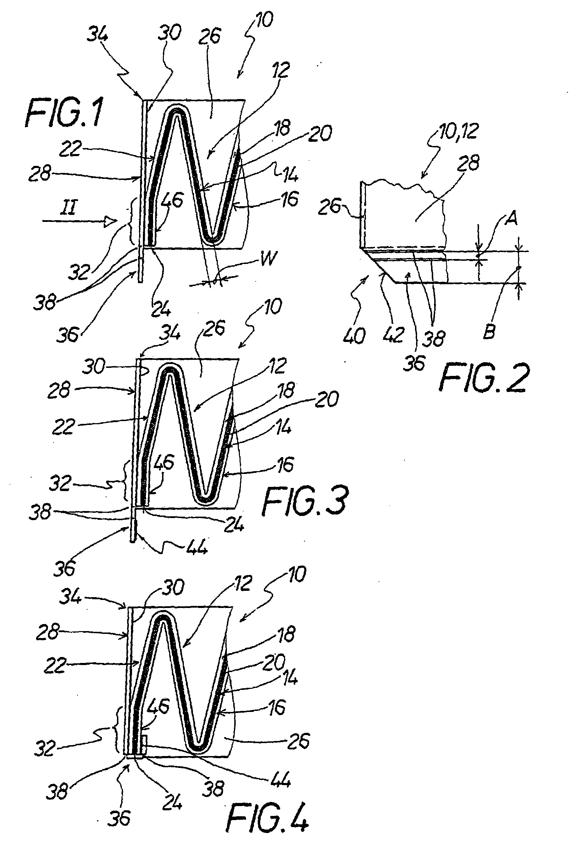

Figur 1 verdeutlicht einen ersten Verfahrensschritt zur Herstellung des Filterelementes 10, das einen zick-zack-förmig gefalteten Filterpack 12 aufweist. Der Filterpack 12 weist mindestens eine Adsorptions-Filterlage 14 und mindestens eine Partikelfilterlage 16 auf. Die Adsorptions-Filterlage 14 weist eine Trägerlage 18 mit Sorptionsmittel-Partikeln 20 auf. Bei den Sorptionsmittel-Partikeln 20 handelt es sich beispielsweise um Aktivkohle-Partikel oder dergleichen.

Der zick-zack-förmig gefaltete Filterpack 12 weist voneinander entfernte Endfalten 22 auf, von welchen nur eine Endfalte 22 gezeichnet ist. Die jeweilige Endfalte 22 besitzt einen Endrand 24. Der Endrand 24 muss abgedichtet werden, um die Sorptionsmittel-Partikel 20 an einem Herausfallen aus dem Filterpack 12 zu hindern.

An den beiden einander gegenüberliegenden Längsseiten des zick-zack-förmig gefalteten Filterpacks 12 ist jeweils ein streifenförmiges Rahmenelement 26 und an den beiden voneinander entfernten stirnseitigen Endfalten 22 des Filterpacks 12 ist jeweils ein streifenförmiges Stirnelement 28 befestigt. Zu diesem Zwecke, d.h. zur Befestigung des Stirnelementes 28 an der zugehörigen Endfalte 22, ist das Stirnelement 28 mit einem Kleber 30 beschichtet.

Bei dem in Figur 1 gezeichneten Ausführungsbeispiel ist die jeweilige Endfalte 22 mit dem zugehörigen Stirnelement 28 teilflächig verklebt. Diese Teilfläche ist mit der Bezugsziffer 32 bezeichnet.

Das jeweilige Stirnelement 28 ist nicht nur mit der zugehörigen Endfalte 22 sondern gleichzeitig auch mit den längsrandseitigen Rahmenelementen 26 verklebt, so dass sich eine Rahmeneinheit 34 für das Filterelement 10 ergibt, welche den zick-zack-förmig gefalteten Filterpack 12 allseitig umschließt.

Das jeweilige Stirnelement 28 weist einen Überstands-Randstreifen 36 auf, der zwei voneinander beabstandete und zueinander parallel verlaufende Schwächungslinien 38 (siehe auch Figur 2) aufweist. Der Abstand A zwischen den beiden Schwächungslinien 38 ist an die Faltendicke W des Filterpacks 12 angepasst.

Bei den Schwächungslinien 38 handelt es sich beispielsweise um Ritzlinien.

Bei der Rahmeneinheit 34 des Filterelementes 10 handelt es sich vorzugsweise um eine textile Rahmeneinheit. Weiterhin ist es möglich, für den Überstands-Randstreifen und/oder die längsrandseitigen Rahmenelemente Kunststoffstreifen zu verwenden. Vorzugsweise kommen hierzu Extrusionsprofile in Betracht.

In Abhängigkeit von der Anzahl der Filterlagen 14 und 16 des Filterpacks 12 und somit der Faltendicke W und unter Berücksichtigung des Faltenabstands beträgt die Breite B des Überstands-Randstreifens 36 beispielsweise 4 bis 8 mm, wobei es sich versteht, dass auch andere Breitendimensionen möglich sind.

Der Überstands-Randstreifen 36 wird bereits vor der Zuführung des Stirnelementes 28 zu dem mit den streifenförmigen Rahmenelementen 26 versehenen Filterpack 12 mit mindestens einer - bei dem in den Zeichnungsfiguren dargestellten Ausführungsbeispiel beiden Schwächungslinien 38 ausgebildet, um das Herumbiegen des Überstands-Randstreifens 36 um den Endrand 24 der Endfalte 22 zu erleichtern.

Um bei diesem Herumbiegen des Überstands-Randstreifens 36 einen ungewollten Kontakt zwischen dem Überstands-Randstreifen 36 und den streifenförmigen Rahmenelementen 26 zu vermeiden, ist der Überstands-Randstreifen 36 des jeweiligen Stirnelementes 28 an seinen beiden voneinander abgewandten Ecken 40 mit einer Abschrägung 42 (siehe Figur 2) ausgebildet.

Figur 3 verdeutlicht den Verfahrensschritt zur Herstellung des Filterelementes 10, bei welchem der Überstands-Randstreifen 36 des an der zugehörigen Endfalte 22 befestigten Stirnelementes 28 an seiner Innenseite mit einem Kleber 44 versehen wird. Dabei kann es sich um einen so genannten Raupenauftrag des Klebers 44 handeln. Anschließend wird der Überstands-Randstreifen 36 um den Endrand 24 der Endfalte 22 herum gebogen und mit der Innenseite 46 der Endfalte 22 mittels des Klebers 44 fest verbunden und dicht verschlossen.

Gleiche Einzelheiten sind in den Figuren 1 bis 4 jeweils mit denselben Bezugsziffern bezeichnet, so dass es sich erübrigt, in Verbindung mit allen Figuren alle Einzelheiten jeweils detailliert zu beschreiben.

Die mit der Erfindung erzielten Vorteile bestehen darin, dass eine spezielle Vorbereitung der Endfalten, beispielsweise ein partielles Entfernen der Sorptionsmittel-Partikel oder des Partikel-Filtermaterials, nicht erforderlich ist, so dass sich eine kostengünstige Realisierung des erfindungsgemäßen Filterelementes ergibt. Es sind auch keine zusätzlichen Materialien, wie Klebestreifen zum Abdichten der Endränder der Endfalten, wie sie in der eingangs zitierten DE 102 49 577 A1 beschrieben sind, erforderlich. Außerdem wird durch den um den Endrand gleichsam U-förmig umgefalteten Überstands-Randstreifen die Formstabilität der jeweiligen Filterelement-Stirnseite erhöht, woraus eine optimale und leckagedichte Anlage des Filterelementes an die Wandung eines zugehörigen Filtergehäuses resultiert. Ein weiterer Vorteil besteht darin, dass auch Filterelemente mit hohen Sorptionsmittel-Auflagen oder nicht exakt geschnittenen Endfalten zuverlässig versiegelt werden und damit eine ausgezeichnete Prozesssicherheit gewährleistet wird. Die Erfindung ist besonders gut für Filterelemente mit mehreren Adsorptions-Filterlagen, wie sie beispielsweise in der eingangs zitierten DE 102 49 998 B3 beschrieben sind, geeignet, weil die Schnittkanten, d.h. die Endränder, zuverlässig vollkommen abdichtend umschlossen sind.

## Patentansprüche

1. Filterelement mit mindestens einer Sorptions-Filterlage (14), die eine Trägerlage (18) mit Sorptionsmittel-Partikeln (20) aufweist, und mit mindestens einer Partikelfilterlage (16) und/oder Abdecklage, wobei die Lagen (14, 16) gemeinsam einen zick-zack-förmig gefalteten Filterpack (12) mit voneinander entfernten Endfalten (22) bilden, deren Endränder (24) abgedichtet sind, so dass die Sorptionsmittel-Partikel (20) im Filterpack (12) unverlierbar vorgesehen sind, wobei an den Längsseiten des Filterpacks (12) jeweils ein streifenförmiges Rahmenelement (26) und an den stirnseitigen Endfalten (22) des Filterpacks (12) jeweils ein streifenförmiges Stirnelement (28) befestigt ist,
**dadurch gekennzeichnet,**
**dass** die jeweilige Endfalte (22) mit dem zugehörigen Stirnelement (28) materialschlüssig verbunden ist, wobei das Stirnelement (28) mit einem Überstands-Randstreifen (36) um den Endrand (24) der zugehörigen Endfalte (22) herum gebogen und mit der Innenseite (46) der Endfalte (22) materialschlüssig verbunden ist.

2. Filterelement nach Anspruch 1,
**dadurch gekennzeichnet,**
**dass** die jeweilige Endfalte (22) mit dem zugehörigen Stirnelement (28) mindestens teilflächig materialschlüssig verbunden ist.

3. Filterelement nach Anspruch 1,
**dadurch gekennzeichnet,**
**dass** die materialschlüssige Verbindung der jeweiligen Endfalte (22) mit dem zugehörigen Stirnelement (28) und des um den Endrand (24) der Endfalte (22) herumgebogenen Überstands-Randstreifens (36) Klebe- oder Schweißverbindungen sind.

4. Filterelement nach Anspruch 1,
**dadurch gekennzeichnet,**
**dass** der Überstands-Randstreifen (36) des jeweiligen Stirnelementes (28) mindestens eine Schwächungslinie (38) aufweist, die dem Endrand (24) der Endfalte (22) zugeordnet ist.

5. Filterelement nach Anspruch 4,
**dadurch gekennzeichnet,**
**dass** der Überstands-Randstreifen (36) des jeweiligen Stirnelementes (28) zwei voneinander beabstandete und zueinander parallel verlaufende Schwächungslinien (38) aufweist, deren Abstand (A) an die Faltendicke oder/und Wanddicke (W) des Filterpacks (12) angepasst ist.

6. Filterelement nach einem der Ansprüche 1 bis 5,
**dadurch gekennzeichnet,**
**dass** der Überstands-Randstreifen (36) des jeweiligen Stirnelementes (28) an seinen beiden voneinander abgewandten Ecken (40) jeweils mit einer Aussparung (42) ausgebildet ist.

7. Filterelement nach einem der vorangehenden Ansprüche,
**dadurch gekennzeichnet,**
**dass** die streifenförmigen Rahmenelemente an den Stirnseiten und/oder an den Längsseiten des Filterpacks aus einem textilen Material ausgebildet sind.

8. Filterelement nach einem der vorangehenden Ansprüche,
**dadurch gekennzeichnet,**
**dass** die streifenförmigen Rahmenelemente an den Stirnseiten und/oder an den Längsseiten des Filterpacks aus Kunststoff, vorzugsweise Extrusionsprofilen, ausgebildet sind.

9. Verfahren zur Herstellung eines Filterelementes (10) nach einem der Ansprüche 1 bis 6, das einen zick-zack-förmig gefalteten Filterpack (12) aus mindestens einer Sorptions-Filterlage (14) und mindestens einer Partikelfilterlage (16) und/oder Abdecklage aufweist, wobei an den Längsseiten des Filterpacks (12) jeweils ein streifenförmiges Rahmenelement (26) und an den stirnseitigen Endfalten (22) des Filterpacks (12) jeweils ein streifenförmiges Stirnelement (28) befestigt wird,
**dadurch gekennzeichnet,**
**dass** an der jeweiligen stirnseitigen Endfalte (22) des Filterpacks (12) ein Streifenelement (28) befestigt wird, das mit einem Überstands-Randstreifen (36) über den Endrand (24) der Endfalte (22) übersteht, und dass der Überstands-Randstreifen (36) anschließend um den Endrand (24) der Endfalte (22) herum gebogen und an der Innenseite (46) der Endfalte (22) befestigt wird.

10. Verfahren nach Anspruch 9,
**dadurch gekennzeichnet,**
**dass** das Stirnelement (28) an der zugehörigen stirnseitigen Endfalte (22) des Filterpacks (12) festgeklebt oder festgeschweißt wird.

11. Verfahren nach Anspruch 7,
**dadurch gekennzeichnet,**
**dass** das Stirnelement (28) mit mindestens einer Schwächungslinie (38) versehen wird, bevor es an der zugehörigen Endfalte (22) befestigt wird.

12. Verfahren nach Anspruch 7,
**dadurch gekennzeichnet,**
**dass** die beiden voneinander abgewandten Ecken (40) des Überstands-Randstreifens (36) des an der Endfalte (22) befestigten Stirnelementes (28) abgeschrägt werden, wonach der Überstands-Randstreifen (36) mit einem Kleber (44) beschichtet und um den Endrand (24) der Endfalte (22) herum gefaltete und an der Innenseite (46) der Endfalte (22) festgeklebt wird.

## Claims

1. Filter element with at least one sorption filter layer (14) featuring a support layer (18) with sorbent particles (20), and with at least one particulate filter layer (16) and/or cover layer, the layers (14, 16) forming together a fanfold filter pack (12) with end pleats (22) separated from each other, the end edges (24) of which are sealed so that the sorbent particles (20) in the filter pack (12) are provided undetachably, a strip-type frame element (26) each being attached to the longitudinal sides of the filter pack (12) and a strip-type frontal element (28) each at the frontal end pleats (22) of the filter pack (12),
**characterized in**
**that** the respective end pleat (22) is positively integrated with the appropriate frontal element (28), the frontal element (28) being bent around the end edge (24) of the appropriate end pleat (22) with a projecting edge strip (36) and positively integrated with the interior side (46) of the end pleat (22).

2. Filter element according to claim 1,
**characterized in**
**that** the respective end pleat (22) is at least partly positively integrated with the appropriate frontal element (28).

3. Filter element according to claim 1,
**characterized in**
**that** the positively integrated connection of the respective end pleat (22) with the appropriate frontal element (28) and the projecting edge strip (36) bent around the end edge (24) of the end pleat (22) are either glued or welded joints.

4. Filter element according to claim 1,
**characterized in**
**that** the projecting edge strip (36) of the respective frontal element (28) features at least one line of weakness (38) which is allocated to the end edge (24) of the end pleat (22).

5. Filter element according to claim 4,
**characterized in**
**that** the projecting edge strip (36) of the respective frontal element (28) features two lines of weakness (38) spaced apart from each other and running parallel to each other, the distance (A) of which is adapted to the pleat thickness or/and to the wall thickness (W) of the filter pack (12).

6. Filter element according to one of the claims 1 to 5,
**characterized in**
**that** the projecting edge strip (36) of the respective frontal element (28) has a recess (42) each at its two corners (40) facing away from each other.

7. Filter element according to one of the above claims,
**characterized in**
**that** the strip-type frame elements at the front sides and/or longitudinal sides of the filter pack are made of a textile material.

8. Filter element according to one of the above claims,
**characterized in**
**that** the strip-type frame elements at the front sides and/or longitudinal sides of the filter pack are made of plastic material, preferably of extruded profiles.

9. Method for manufacturing a filter element (10) according to one of the claims 1 to 6, featuring a fanfold filter pack (12) consisting of at least one sorption filter layer (14) and at least one particulate filter layer (16) and/or cover layer, a strip-type frame element (26) each being attached to the longitudinal sides of the filter pack (12) and a strip-type frontal element (28) each at the frontal end pleats (22) of the filter pack (12),
**characterized in**
**that** to the respective frontal end pleat (22) of the filter pack (12) a strip element (28) is attached which projects over the end edge (24) of the end pleat (22) with a projecting edge strip (36) and that the projecting edge strip (36) is then bent around the end edge (24) of the end pleat (22) and attached to the interior side (46) of the end pleat (22).

10. Method according to claim 9,
**characterized in**
**that** the frontal element (28) is either glued or welded firmly to the appropriate frontal end pleat (22) of the filter pack (12).

11. Method according to claim 7,
**characterized in**
**that** the frontal element (28) is provided with at least one line of weakness (38) before being attached to the appropriate end pleat (22).

12. Method according to claim 7,
**characterized in**
**that** the two corners (40) facing away from each other of the projecting edge strip (36) of the frontal element (28) attached to the end pleat (22) are beveled, whereupon the projecting edge strip (38) is coated with glue (44) and folded around the end edge (24) of the end pleat (22) and firmly glued to the interior side (46) of the end pleat (22).

## Revendications

1. Elément filtrant avec au moins une couche filtrante à sorption (14) qui présente une couche support (18) avec des particules d'agent de sorption (20) et avec au moins une couche filtrante à particules (16) et/ou une couche de recouvrement, les couches (14, 16) formant ensemble un ensemble de filtre (12) plié en accordéon avec des plis d'extrémité (22) distants les uns des autres dont les bords finaux (24) sont étanchés de sorte que les particules d'agent de sorption (20) dans l'ensemble de filtre (12) ne puissent pas être perdues, respectivement un élément-cadre (26) en forme de bande étant prévu sur les côtés longitudinaux de l'ensemble de filtre (12) et respectivement un élément frontal (28) en forme de bande étant fixé sur les plis d'extrémité frontaux (22) de l'ensemble de filtre (12),
**caractérisé en ce**
**que** le pli d'extrémité (22) respectif est lié par matière à l'élément frontal (28) correspondant, l'élément frontal (28) avec une bande marginale en saillie (36) étant courbé autour du bord final (24) du pli d'extrémité (22) correspondant et étant lié par matière à la face intérieure (46) du pli d'extrémité (22).

2. Elément filtrant selon la revendication 1,
**caractérisé en ce**
**que** le pli d'extrémité (22) respectif est, au moins en partie, lié par matière à l'élément frontal (28) correspondant.

3. Elément filtrant selon la revendication 1,
**caractérisé en ce**
**que** l'assemblage lié par matière du pli d'extrémité (22) respectif avec l'élément frontal (28) correspondant et de la bande marginale en saillie (36) courbée autour du bord final (24) du pli d'extrémité (22) sont des assemblages collés ou soudés.

4. Elément filtrant selon la revendication 1,
**caractérisé en ce**
**que** la bande marginale en saillie (36) de l'élément frontal (28) respectif présente au moins une ligne d'affaiblissement (38) qui est assignée au bord final (24) du pli d'extrémité (22).

5. Elément filtrant selon la revendication 4,
**caractérisé en ce**
**que** la bande marginale en saillie (36) de l'élément frontal (28) respectif présente deux lignes d'affaiblissement (38) distantes l'une de l'autre et parallèles dont la distance (A) est adaptée à l'épaisseur du pli et/ou de la paroi (W) de l'ensemble de filtre (12).

6. Elément filtrant selon l'une des revendications 1 à 5,
**caractérisé en ce**
**que** la bande marginale en saillie (36) de l'élément frontal (28) respectif est dotée, à ses deux coins opposés (40), de respectivement un évidement (42).

7. Elément filtrant selon l'une des revendications précédentes,
**caractérisé en ce**
**que** les éléments-cadres en forme de bandes sont réalisés, au niveau des faces frontales et/ou des côtés longitudinaux de l'ensemble de filtre, en un matériau textile.

8. Elément filtrant selon l'une des revendications précédentes,
**caractérisé en ce**
**que** les éléments-cadres en forme de bandes sont réalisés, au niveau des faces frontales et/ou des faces longitudinales de l'ensemble de filtre, en plastique, de préférence en profils d'extrusion.

9. Procédé de fabrication d'un élément filtrant (10) selon l'une des revendications 1 à 6 qui présente un ensemble de filtre (12) plié en accordéon constitué d'au moins une couche filtrante à sorption (14) et d'au moins une couche filtrante à particules (16) et/ou d'une couche de recouvrement, respectivement un élément-cadre (26) en forme de bande étant fixé sur les côtés longitudinaux de l'ensemble de filtre (12) et respectivement un élément frontal (28) en forme de bande étant fixé sur les plis d'extrémité frontaux (22) de l'ensemble de filtre (12),
**caractérisé en ce**
**qu'**un élément en forme de bande (28) est fixé sur le pli d'extrémité frontal (22) respectif de l'ensemble de filtre (12) qui dépasse avec une bande marginale en saillie (36) du bord final (24) du pli d'extrémité (22), et en ce que la bande marginale en saillie (36) est ensuite courbée autour du bord final (24) du pli d'extrémité (22) correspondant et est fixée à la face intérieure (46) du pli d'extrémité (22).

10. Procédé selon la revendication 9,
**caractérisé en ce**
**que** l'élément frontal (28) est fermement collé ou soudé au pli d'extrémité frontal (22) correspondant de l'ensemble de filtre (12).

11. Procédé selon la revendication 7,
**caractérisé en ce**
**que** l'élément frontal (28) est doté d'au moins une ligne d'affaiblissement (38) avant d'être fixé au pli d'extrémité (22) correspondant.

12. Procédé selon la revendication 7,
**caractérisé en ce**
**que** les deux coins opposés (40) de la bande marginale en saillie (36) de l'élément frontal (28) fixé au pli d'extrémité (22) sont biseautés, après quoi la bande marginale en saillie (36) est revêtue d'une colle (44) et pliée autour du bord final (24) du pli d'extrémité (22) et collée sur la face intérieure (46) du pli d'extrémité (22).
